# EUROPEAN PATENT APPLICATION

(11) **EP 2 099 202 A1**
(43) Date of publication of application: **09.09.2009**
(21) Application number: 08004182.5
(22) Date of filing: 06.03.2008
(51) Int. Cl.: H04M 1/23, G06F 1/16, H04M 1/725

(54) **Automatic switch device by sensing direction for a handheld apparatus having double-sided keypad arrangement**

(71) Applicant: TOPSEED TECHNOLOGY CORP., Chung Ho City, Taipei Hsien, Taiwan 235 (TW)
(72) Inventor: Chen, Shoel-Lai, Chung Ho City, Taipei Hsien, Taiwan 235 (TW); Hsu, Che-Hao, Chung Ho City, Taipei Hsien, Taiwan 235 (TW)
(74) Representative: Merkle, Gebhard

(57) **Abstract**

A switch device disposed in a handheld apparatus having double-sided keypad arrangement is capable of automatically switching to enable a keypad on an upward side and disable the downward keypad by means of sensing directionality of the apparatus. The handheld apparatus has a cuboidal housing, whose two opposite sides equip a keypad, respectively. The switch device in the apparatus has a gravity sensor for detecting a distribution of gravity of the apparatus along three coordinate axes. The senor sends a gravity signal to a controller, which judges a direction of the apparatus being disposed. The controller sends a switching signal to a relay connected to the two keypads. The relay controls either of the keypads to be available.

## Description

### THCHNICAL FIELD

This invention relates to switches, and more particularly to switches controlled by gravity.

### BACKGROUND OF THE INVENTION

With great advance of battery and semiconductor technologies, so many kinds of handheld apparatuses, such as mobile phones, portable multimedia players (PMPs), remote controls, MPS players, personal digital assistants, digital cameras, portable global positioning systems, electronic dictionaries, the SideShow devices used for the VISTA operating system of Microsoft etc., become popular. It is very confused and inconvenient that a user carries or uses various individual handheld apparatuses. Thus, a 2-in-1 integrating approach is adopted by many conventional handheld apparatuses, such as a combination of a SideShow device and a remote control, or a combination of a mobile phone and a PMP. Usually, those 2-in-1 apparatuses arrange keypads of the two combined systems on two opposite side of a cuboidal housing, respectively. When a user holds the 2-in-1 apparatus with his/her palm to operate either of the two systems facing him/her, it will be very possible that the keypad on backward side of another system not being operated is unintentionally pressed. Therefore, undesired operations and unnecessary power consuming of battery will occur.

Some handheld apparatuses with double-sided keypad arrangement equip a switch for manually switching a keypad on either side to be enabled and the other one to be disabled, so that it can prevent users from intentional operations to the disabled keypad. However, under this arrangement, every time a user must first operate the switch to enable the keypad of the system he/she wants to use. It is very inconvenient. Further, the switch also tends to be damaged because of frequent operations.

### SUMMARY OF THE INVENTION

A primary object of the invention is to provide an automatic switch device by sensing direction for a handheld apparatus having double-sided keypad arrangement, which can detect directionality of the handheld apparatus to automatically enable the keypad on the upward side (facing the user) and simultaneously to disable the downward keypad (facing the ground or facing outward). An automatic switch without any additional operations can be performed when a user turns over the handheld apparatus. It will be very convenient for users of the apparatuses with double-sided keypad arrangement.

In order to accomplish the object abovementioned, the handheld apparatus has a cuboidal housing, whose two opposite sides equip a keypad, respectively. The switch device in the apparatus has a gravity sensor for detecting a distribution of gravity of the apparatus along three coordinate axes. The senor sends a gravity signal to a controller, which judges direction of the apparatus being disposed. The controller sends a switching signal to a relay connected to the two keypads. The relay controls either of the keypads to be available.

### DESCRIPTION OF DRAWINGS

FIG. 1 illustrates a handheld apparatus having double-sided keypad arrangement in accordance with the principles of the invention;
FIG. 2 illustrates a block diagram of an embodiment in accordance with the principles of the invention; and
FIG. 3 is a graph indicating a principle of direction judgment according to the invention.

### DETAILED DESCRIPTION OF THE INVENTION

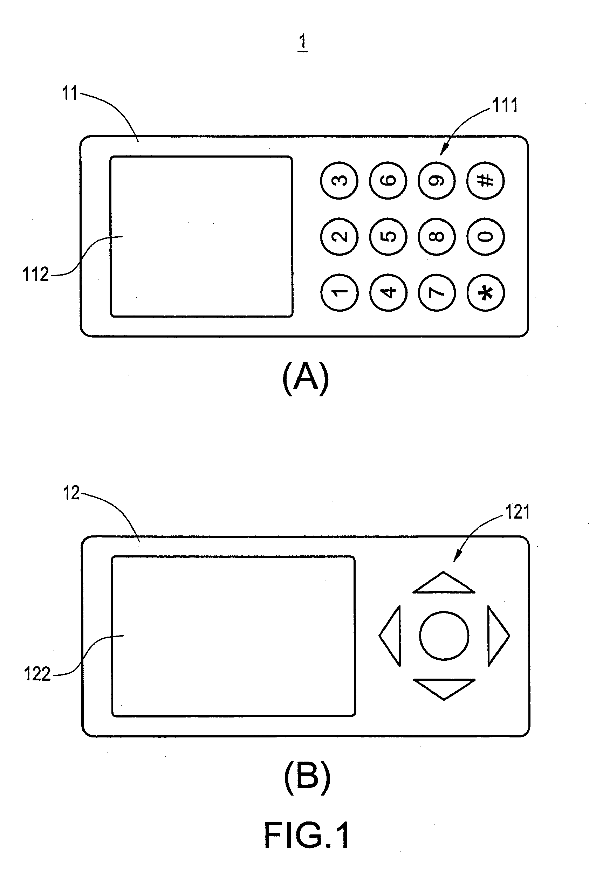

Referring to FIG. 1, a handheld apparatus having double-sided keypad arrangement in accordance with the principles of the invention is shown. The apparatus has a cuboidal housing 1 including a first panel 11 and a second panel 12 which are parallel. Two keypads 111, 121 are equipped on the two panels 11, 12, respectively. Of course, other elements, such as a display 112, 122, also can be additionally equipped on the panels 11, 12.

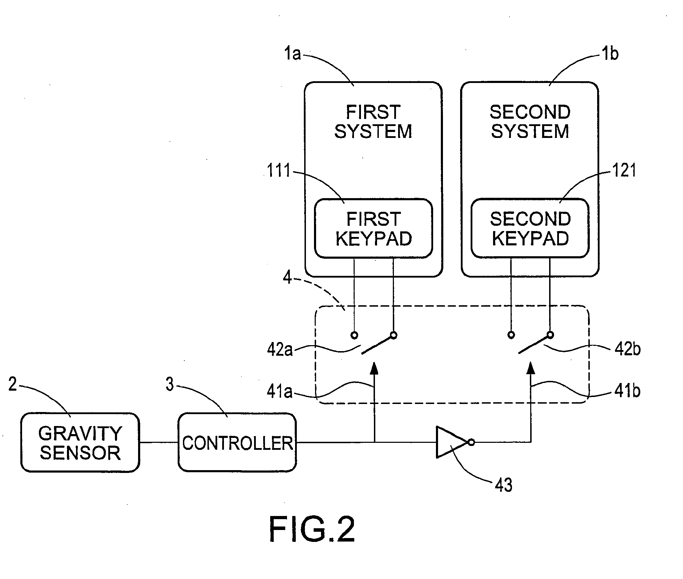

Referring to FIG. 2, it shows a preferred embodiment according to the invention. There are two independent systems, a first system 1a and a second system 1b, in the housing 1. The two keypads 111, 121 belong to the two systems 1a, 1b, respectively. As mentioned above, the two keypads 111, 121 are located on two parallel sides of the housing, respectively. A gravity sensor 2, which can detect a distribution of gravity along three rectangular coordinate axes, is arranged in the housing 1. The gravity sensor 2 electrically connects to a controller 3. The gravity sensor 2 sends a gravity signal reflecting the distribution of gravity along three rectangular coordinate axes to the controller 3. In the embodiment as shown in FIG. 2, an output end of the controller 3 electrically connects to control ends 41a, 41b of a relay 4. An inverter (NOT gate) 43 is arranged between the two control ends 41a, 41b to make them be constantly opposite. The two control ends 41a, 41b control switches 42a, 42b to open or close, respectively. The two switches 42a, 42b electrically connect to the first keypad 111 and the second keypad 121, respectively. The controller 3 judges directionality of the housing 1 according to the gravity signal from the gravity sensor 2, and then output a switching signal to the control ends 41 a, 41b of the relay 4 to have the two keypads 111, 121 enable and disable, respectively. Those skilled in the art will recognize that the term "enable" means the keypads 111, 121 are available and "disable" means they are unavailable. The two keypads 111, 121 are always under an opposite state. The embodiment shown in FIG.2 uses one inverter 43 and two independent single-pole-single-throw (SPST) switches to constitute the relay 4, but those skilled in the art must know that the relay 4 also can be replaced with any other types, such as single-pole-double-throw (SPDT), double-pole-single-throw (DPST) or double-pole-double-throw (DPDT). If a relay with double pole or double throw is adopted, the inverter 43 can be optionally disappeared by means of a directly inverse switching through the relay.

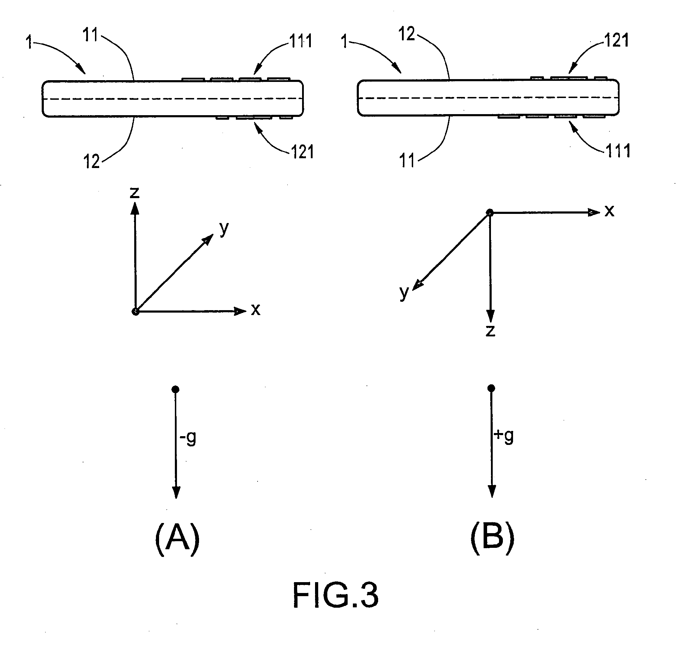

Referring to FIG. 3, let's suppose the housing 1 of the handheld apparatus is in a horizontal position, i.e. its both first panel 11 and second panel 12 are parallel to an x-y plane of a 3 dimensional rectangular coordinate system. Let's further suppose the first panel 11 is a front and the second panel 12 is a back, i.e. z-axis is in a direction toward the first panel 11. When the first panel 11 is upward to face a user (not shown) and the second panel 12 is downward to face the ground (not shown), a gravity of -g on z-axis will be detected as shown in FIG. 3A. (because the gravity is in an opposite direction of z-axis, it becomes negative.) Contrarily, when the housing 1 is turned over with an angle of 180 degrees to make the second panel 11 upward and the first panel 11 downward, z-axis becomes downward as shown in FIG. 3B. At this time, gravity completely falls on z-axis, but a gravity of +g on z-axis will be detected because the direction of gravity is the same as z-axis. The controller 3 can judge that either the first panel 11 or the second panel 12 is upward according to the principle, and further control the relay 3 to make the upward keypad 111, 121 enable and the other one disable. Of course, the abovementioned configuration is suitable for a using mode with the operated panel being upward. If the present invention is utilized in other special using modes, the problem can be simply solved by turning over the coordinate axes or adjusting the judging standard in the controller 3. Additionally, under a practical situation, the housing 1 of the handheld apparatus may be disposed in any other directions or angles besides horizontal, its detailed judging process will be filed as another individual patent application. In principle, it can be a rough judging standard that the gravity on z-axis is positive or negative.

The present invention can automatically switch a keypad on one side being operated to be enabled and the other one to be disabled without manually switching when a user is turning over a handheld apparatus with double-sided keypad arrangement. An unintentional operation to the non-being-operated keypad can be avoided. Therefore it is very convenient for users.

## Claims

1. An automatic switch device by sensing direction for a handheld apparatus having double-sided keypad arrangement, wherein the handheld apparatus has a housing (1) including a first panel (11) and a second panel (12) which are parallel, and the first panel (11) and the second panel (12) equip a first keypad (111) and a second keypad (121), respectively, the automatic switch device comprising:
a gravity sensor (2) disposed in the housing (1) for detecting a direction of gravity and outputting a gravity signal;
a controller (3) disposed in the housing (1), electrically connected to the gravity sensor (2) for receiving the gravity signal, and judging a direction of the housing (1) according to the gravity signal and then outputting a control signal; and
a relay (4) disposed in the housing (1) and electrically connected to the controller (3);
**characterized in that** the relay (4) has a control end (41 a, 41b) electrically connected to controller (3) for receiving the control signal, and at least one switch (42a, 42b) controlled by the control end (41a, 41b) and electrically connected to the first keypad (111) and the second keypad (121), wherein the relay (4) switches one of the two keypads (111, 121) to be enabled and the other one to be disabled under a control of the control signal from the controller (3).

2. The switch device of claim 1, wherein the gravity sensor (2) detects a distribution of gravity along three dimensional rectangular coordinate axes.
